**Europäisches Patentamt**

**European Patent Office**

**Office européen des brevets**

(11) Veröffentlichungsnummer: **0 225 420 B1**

(12) **EUROPÄISCHE PATENTSCHRIFT**

(45) Veröffentlichungstag der Patentschrift:
**07.03.90**

(21) Anmeldenummer: **85890309.9**

(22) Anmeldetag: **13.12.85**

(51) Int. Cl.⁴: **E02D 7/18,** E02D 13/00,
F16F 9/08, E01B 26/00

(54) Einrichtung zum Eintreiben von Fundamentrohren od. dgl. in Erdschichten mittels Vibrationsvorrichtung.

(43) Veröffentlichungstag der Anmeldung:
**16.06.87 Patentblatt 87/25**

(45) Bekanntmachung des Hinweises auf die Patenterteilung:
**07.03.90 Patentblatt 90/10**

(84) Benannte Vertragsstaaten:
**AT CH DE FR GB LI SE**

(56) Entgegenhaltungen:
**EP-A- 0 116 164
DE-A- 3 211 143
FR-E- 85 116
US-A- 3 004 389
US-A- 3 344 874
US-A- 3 527 452**

(73) Patentinhaber: **Franz Plasser Bahnbaumaschinen-Industriegesellschaft m.b.H., Johannesgasse 3, A-1010 Wien(AT)**

(72) Erfinder: **Theurer, Josef, Johannesgasse 3, A-1010 Wien(AT)**
Erfinder: **Ganguly, Mihir, Am Steinbühel 23, A-4020 Linz(AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft ein Einrichtungssystem zum Eintreiben von Fundament- bzw. Halteelementen, wie Profile od. dgl., in Erdschichten, insbesondere Fundamentrohre für Leitungsmasten an Bahngeleisen, mittels einer an einem seiten- und höhenverstellbaren Last-Ausleger, wie einem Seil-Kran angeordneten Vibrationsvorrichtung, wobei zwischen Last-Halterungsmittel, insbesondere dem Lasthaken des Krans und der Vibrationsvorrichtung zum Beaufschlagen des einzutreibenden Elementes ein Schwingungsdämpfer angeordnet ist.

Es ist – gemäß EP-A 0 102 322 – ein Einrichtungssystem dieser Art bzw. ein Verfahren zum Einrammen von Fundamentpfählen für Leitungsmasten an einem Bahngeleise bekannt. Mit diesem können zur Erstellung von Fahrleitungsmasten längs Bahngeleisen mittels einer auf dem Geleise fahrbaren Rammvorrichtung vorfabrizierte Betonpfähle als Fundament eingerammt werden. Mit jedem eingerammten Pfahl wird dann ein Leitungsmast verbunden. Diese bekannte Vorrichtung ist auf einem gleisverfahrbaren Tiefladewagen angeordnet und besteht aus einem Seilbagger mit einem Ausleger, an welchem ein sogenannter Mäkler mit einer Längsführung vorgesehen ist. Ein über eine Seilwinde höhenverstellbarer Rammbär ist zur Beaufschlagung des einzutreibenden Fundamentpfahles entlang dieser Längsführung auf- und abbewegbar. Eine weit höhere Leistung zum Eintreiben derartiger Fundamentbzw. Halteelemente, wie solcher Fundamentpfähle für Leitungsmasten, wird durch Verwendung von Vibratoren erzielt, welche als Vibrationshammer den Eintreib- bzw. Ramm-Vorgang wesentlich rascher und auch wesentlich genauer durchführen. Insbesondere vorteilhaft sind sogenannte hydraulische Schwingungserreger, beispielsweise gemäß der CH-PS 641 064, mit welchen ein besonders rasches, leistungsfähiges und genaues Eintreiben derartiger Elemente möglich ist. Der Nachteil bei der Verwendung solcher hydraulischer Vibrationsvorrichtungen besteht im wesentlichen darin, daß die auf das einzurammende Gut übertragenen starken Vibrationen über das Last-Halterungsmittel, insbesondere den Lasthaken und dem daran befestigten Seil auf den Kran selbst mitübertragen werden, wodurch um diese Kräfte auffangen zu können, wieder ein relativ leistungsfähiger und im Aufbau wesentlich stärkerer Kran erforderlich ist. Da derartige einzutreibende Fundamentrohre beispielsweise bis zu 4 m lang sind und in dieser Länge als im wesentlichen Ganzes in das Erdreiche eingebracht werden müssen, auf welchem dann die eigentlichen Masten befestigt werden, weisen diese Rohre auch ein hohes Gewicht auf, welches zusätzlich mit dem Gewicht der hydraulischen Vibrationsvorrichtung einen relativ großen Kran mit hoher Tragwerksgruppe erforderlich macht, um die auftretenden Schwingungswechselbeanspruchungen bzw. um die relativ großen Schwingungs-Bandbreiten zumindest einigermaßen in den Griff zu bekommen. Bei kleinerer Dimensionierung des Krans besteht darüber hinaus die Gefahr eines frühzeitigen Ausfalles des Kranauslegers oder anderer Krankomponenten, wie Drehwerkslagerung, Gleitführungen oder auch der Sockelkonstruktion.

Durch die US-PS 3 344 874 ist ein Gerät zum Isolieren des Vibrationssystems eines Vibrations-Pfahleintreibers von einer unerwünschten Übertragung in die Tragstruktur des Vibrations-Pfahleintreibers bekannt, umfassend eine Luftfederung, Einrichtungen zum Befestigen eines Endes der Luftfederung mit dem Vibrations-Pfahleintreiber und Einrichtungen zum Befestigen des anderen Endes der Luftfederung mit der Tragstruktur. Die Luftfederung besteht aus einer Zylinder-Kolben-Anordnung, deren Kammern mit Luft oder Gas beaufschlagt werden. Bei dieser Anordnung müßte die Kolbendichtung extrem dicht sein, damit kein Druckausgleich zwischen den Kammern über die Kolbendichtung stattfinden kann. In der Praxis ist eine derartige Dichtung kaum realisierbar, da relativ hohe Druckwerte zur Anwendung gelangen.

Es ist auch – gemäß EP-A 10 116 164 – eine hydraulisch angetriebene Vibrationsramme bekannt, wobei auf getrennten Unwuchtwellen gelagerte Unwuchtmassen durch je einen Hydromotor mit entgegengesetztem Drehsinn beaufschlagt werden. Zur Dämpfung der Vibrationsschwingungen ist zwischen einem Krankhaken und der Vibrationsramme ein aus Federelementen und einem Kunststoffkörper gebildeter Schwingungsdämpfer vorgesehen. Ein derartig ausgebildeter Schwingungsdämpfer ist jedoch insbesondere für eine größere Arbeitsleistung der Vibrationsramme nicht zweckmäßig, da die Federelemente zu einer raschen Ermüdung bzw. zu Bruch führen.

Schließlich ist auch – gemäß FR-PS 1 276 461 – eine von der Kategorie der vorliegenden Anmeldung allerdings völlig abweichende Flüssigkeitsfederung für Fahrzeuge zur Stoßdämpfung bekannt.

Die Aufgabe der Erfindung besteht nun darin, ein Einrichtungssystem der eingangs beschriebenen Art zum Eintreiben von Fundament- bzw. Halteelementen in Erdschichten zu schaffen, mit welchem eine verbesserte Arbeitsdurchführung erzielbar ist.

Die Aufgabe der Erfindung wird in überraschend einfacher Weise mit dem eingangs beschriebenen Einrichtungssystem dadurch gelöst, daß der über eine Seilhalterung mit der Vibrationsvorrichtung verbundene Schwingungsdämpfer durch eine hydraulisch beaufschlagbare, zwei Hydraulik-Zylinder-Kammern aufweisende Zylinder-Kolben-Anordnung gebildet und der Zylinder an – mit Drucköl bzw. Gas gefüllte – Membranspeicher angeschlossen ist, wobei jede Hydraulik-Zylinder-Kammer mit einem Absperrorgan für die Drucköleinspeisung verbunden und jedem Membranspeicher zur Regelung der Gasvorspannung ein Manometer vorgeschaltet ist. Durch diese Zwischenschaltung eines hydraulisch beaufschlagbaren Schwingungsdämpfers werden alle schädlichen Schwingungen vom Kran und auch beispielsweise von dem den Kran tragenden Fahrzeug ferngehalten, wodurch ein wesentlich einfacherer und hinsichtlich der Leistungsaufnahme kleinerer Kran für derartige Arbeiten verwendbar ist. Darüber hinaus wird auch die Lebensdauer aller anderen mit dem Kran verbundenen Maschinenteile, Lagerungen und dgl., wesentlich gesteigert. Durch diese wirkungsvolle Verbesserung bzw. Eliminierung der Vibrationen auf dem Kran selbst und dem beispielsweise damit verbundenen Fahrzeug kann in vorteilhafter Weise das Fahrzeug selbst für weitere Aufgaben oder Transportbereiche im Zusammenhang mit derartigen Arbeitsdurchführungen verwendet werden. Diese Anordnung gewährleistet eine besonders feine Abstimmungsregelung entsprechend der jeweils öfters unterschiedlichen einzutreibenden Fundament- bzw. Halteelemente.

Eine bevorzugte Ausführungsform der Erfindung besteht weiters darin, daß die über eine Seilhalterung mit dem hydraulisch beaufschlagbaren Schwingungsdämpfer verbundene hydraulische Vibrationsvorrichtung als hydraulischer Hammer und zum klemmbaren Erfassen bzw. Transportieren des einzutreibenden Elementes, insbesondere des Fundamentrohres ausgebildet ist. Diese Ausbildung gewährleistet einerseits eine sichere Halterung der einzutreibenden Elemente durch die hydraulische Vibrationsvorrichtung und ermöglicht andererseits eine besonders wirkungsvolle Übertragung der Schwingungen auf das einzutreibende Element. Die spezielle Verbindung schafft eine gegenüber der hydraulischen Vibrationsvorrichtung von Schwingungsübertragungen freie Lagerung des Schwingungsdämpfers, so daß die von der hydraulischen Vibrationsvorrichtung verursachten Schwingungen in verminderter Größe bzw. Wirkung auf den Schwingungsdämpfer übertragen werden.

Nach einem besonders bevorzugten Merkmal der Erfindung sind die beiden Kammern des Hydraulik-Zylinders des hydraulischen Schwingungsdämpfers beidseitig des Kolbens über Leitungen jeweils mit den voneinander unabhängigen, mit Drucköl bzw. Gas gefüllten Membranspeichern verbunden. Durch diese Ausbildung bzw. Anordnung kann die Hydraulik-Zylinder-Kolben-Stange jeweils immer zwischen zwei vorgespannte Ölsäulen fixiert werden, wodurch die von der hydraulischen Vibrationsvorrichtung bzw. dem Hydraulikhammer übertragenen Schwingungen über die Zylinder-Kolben-Stange zu der vorgespannten Hydraulik-Ölsäule im Zylinder abgeleitet werden. Der Gas-Vorspanndruck kann hierbei in den Membran-Speichern über die Zylinder-Ölsäule in Schwingungen versetzt werden, wodurch der größere Mantel des Hydraulik-Zylinders, der mit dem Lasthaken verbunden ist, weitgehend von Schwingungen freigehalten wird.

Nach einer besonders bevorzugten Ausbildung der Erfindung ist der mit der hydraulischen Vibrationsvorrichtung über den hydraulisch beaufschlagbaren Schwingungsdämpfer verbundene, seiten- und höhenverstellbare Kran mittig auf einem mit Schienenfahrwerken versehenen Fahrzeug angeordnet, welches beidseitig des Kran-Schwenkbereiches zur im wesentlichen vertikalen Lagerung von Fundamentrohren für Leitungsmasten zum Eintreiben links oder rechts eines Bahngeleises ausgebildet ist, wobei an beiden Längsseiten des Maschinenrahmens des Fahrzeuges über jeweils eine hydraulische Zylinder-Kolben-Anordnung beaufschlagbare und über eine Achse im wesentlichen parallel zur Gleisebene verschwenkbare Zentrier- bzw. Führungs-Ausleger angeordnet sind. Mit einer solchen Ausbildung kann in besonders vorteilhafter Weise auf dem von Vibrationen freigehaltenen Fahrzeug das Stapeln bzw. das Lagern derartiger Fundamentrohre für ein rasches und genaues Verlegen einer großen Anzahl derartiger Rohre durchgeführt werden. Mit dem Zentrier- bzw. Führungsausleger zu beiden Seiten des Fahrgestellrahmens kann wahlweise das Eintreiben derartiger Fundamentrohre links oder rechts eines Bahngeleises vorgenommen werden, wobei eine rasche und genaue Anlage dieser Fundamentrohre beim Anfang des Eintreibevorganges durch Zentrierung derselben erzielbar ist.

Schließlich ist nach einem weiteren Merkmal der Erfindung der hydraulische Schwingungsdämpfer an der gleichen, am Fahrzeug vorgesehenen Hydraulikversorgungseinrichtung angeschlossen wie alle anderen hydraulischen Antriebe, insbesondere die Antriebe zur Seiten- und Höhenverstellung des Krans, der hydraulischen Vibrationsvorrichtung und der seitenverschwenkbaren Ausleger, wodurch eine besonders wirtschaftliche und leistungsfähige Einrichtung geschaffen wird.

Die Erfindung wird im folgenden an Hand eines in der Zeichnung zum Teil schematisch - dargestellten Ausführungsbeispieles näher beschrieben.

Es zeigen:

Fig. 1 eine Seitenansicht eines gleisverfahrbaren Fahrzeuges mit dem erfindungsgemäßen Einrichtungssystem

Fig. 2 eine Draufsicht gemäß Fig. 1,

Fig. 3 eine Stirnansicht gemäß III der Fig. 1, jedoch mit seitenverschwenktem Seil-Kran und

Fig. 4 ein Schaltschema des erfindungsgemäß angeordneten Schwingungsdämpfers.

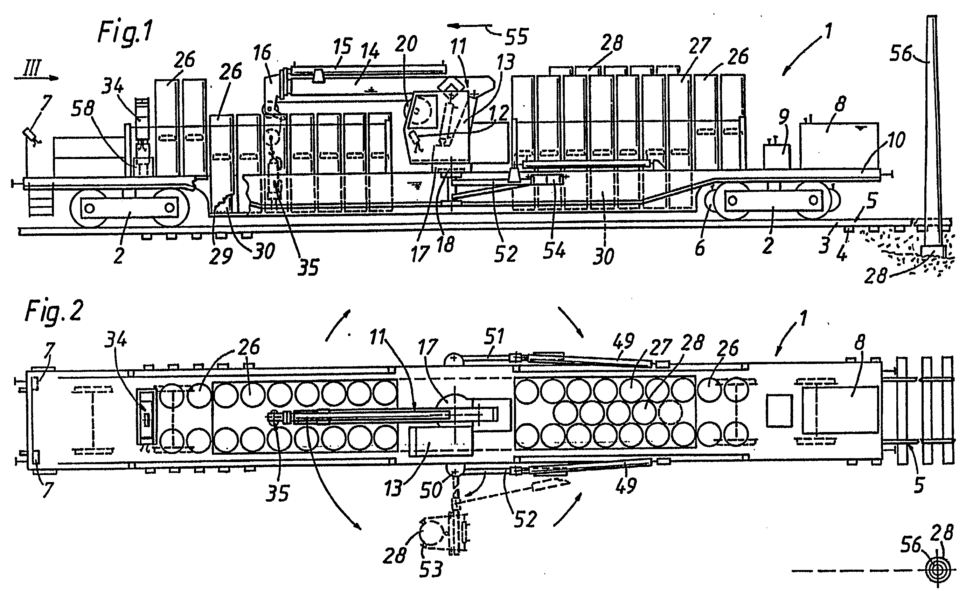

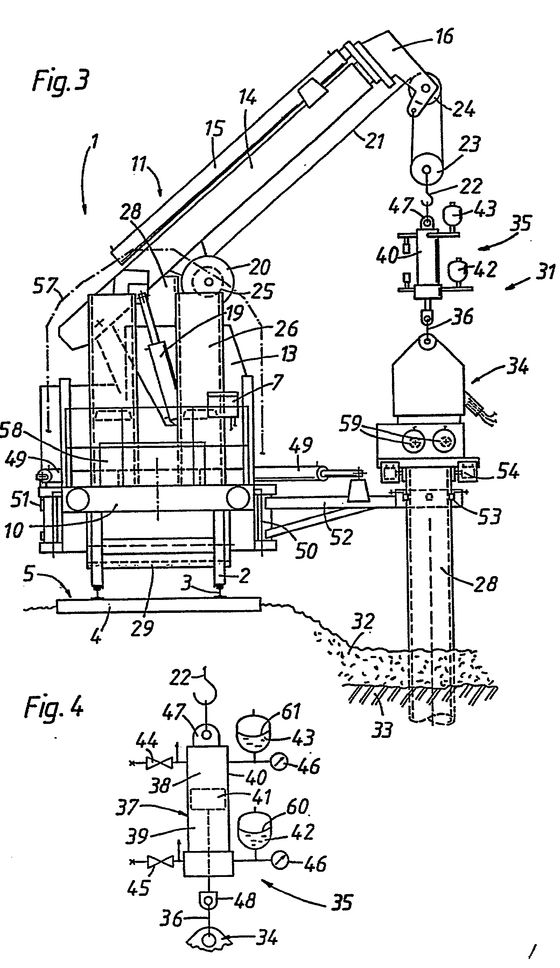

Das in den Fig.1 und 2 dargestellte Fahrzeug 1 ist mit Schienenfahrwerken 2 zum Verfahren auf einem aus Schienen 3 und Schwellen 4 gebildeten Gleis 5 ausgestattet. Mit 6 ist ein Fahrantrieb, mit 7 ein Fahr-Steuerpult, mit 8 eine Engergieversorgungseinrichtung und mit 9 eine Hydraulikversorgungseinrichtung bezeichnet. Am Maschinenrahmen 1o des Fahrzeuges 1 ist etwa mittig ein seiten- und höhenverstellbarer Seil-Kran 11 zur durchgehenden beidseitigen Verschwenkbarkeit bis 36o° vorgesehen, der mit einer, mit einem Steuerpult 12 versehenen Krankabine 13 ausgestattet ist. Der seiten- und höhenverstellbare Kran 11 ist - wie auch in Fig.3 ersichtlich - mit einem Teleskop-Ausleger 14 und einem mit diesem verbundenen, durch eine hydraulische Zylinder-Kolben-Anordnung gebildeten Längsverstellantrieb 15 sowie einem Auslegerkopf 16 versehen und ist gemeinsam mit der Krankabine 13 auf einer Plattform 17 mit seinem Kran-Schwenkantrieb 18 verschwenkbar. Mit 19 ist ein, durch eine hydraulische Zylinder-Kolben-Anordnung gebildeter Hubantrieb und mit 2o eine Seiltrommel bezeichnet. Am Auslegerkopf 16 ist ein Seil 21 befestigt, welches über eine, mit einem Lasthaken 22 versehene Unterflasche 23 und eine am Auslegerkopf vorgesehene Umlenkrolle 24 geführt ist und über einen mit der Seiltrommel 2o verbundenen Antrieb 25 zur Lastaufnahme beaufschlagbar ist.

Wie in Fig.1 und 2 ersichtlich, sind am Maschinenrahmen 1o des Fahrzeuges 1 beidseitig des Seil-Krans 11 in Maschinenlängsrichtung Fundamentrohre 26,27 und 28 gelagert, wobei jeweils vier, etwa 2,5 m lange Fundamentrohre 26 am Boden des Maschinenrahmens im Bereich der Schienenfahrwerke 2 und alle übrigen Fundamentrohre 26,27 und 28 in einer wannenartigen Ausnehmung des Maschinenrahmens tiefer gelagert sind, um für den Teleskopausleger 15 des Krans, insbesondere bei Überstellfahrten, eine lichtraumprofilfreie Endstellung zu ermöglichen. Das Fahrzeug 1 ist zur Aufnahme bzw. zum Transport von insgesamt einundvierzig Fundamentrohren ausgebildet und zwar acht Fundamentrohre 26, achtundzwanzig 3,4 m langen Fundamentrohren 27 und fünf 3,6 m langen Fundamentrohren 28. Diese sind am Boden des Maschinenrahmens 1o bzw. am Boden 29 der Ausnehmung mittels an diesen befestigter Führungshülsen 3o teleskopförmig auf- und abschiebbar angeordnet.

Das in den Fig.1 bis 3 dargestellte Fahrzeug 1 mit dem darauf angeordneten seiten- und höhenverstellbaren Seil-Kran 11 einer relativ niedrigen Tragwerksgruppe und den beidseitig zu diesem angeordneten Fundamentrohren 26 bzw. 27 und 28 ist mit einem Einrichtungssystem 31 zum Eintreiben dieser Fundamentrohre in das Schotterbett 32 bzw. die darunter befindlichen Erdschichten 33 ausgestattet. Das Einrichtungssystem 31 besteht aus einer - wie insbesondere aus Fig.3 ersichtlich - hydraulischen Vibrationsvorrichtung 34, die als hydraulischer Hammer und zum klemmbaren Erfassen bzw. Transportieren des einzutreibenden Fundamentrohres ausgebildet ist. Zwischen dem über die Seiltrommel 2o höhenverstellbaren Lasthaken 22 des Seil-Krans 11 und der hydraulischen Vibrationsvorrichtung 34 ist ein hydraulisch beaufschlagbarer Schwingungsdämpfer 35 angeordnet, welcher einerseits unmittelbar an dem Lasthaken 22 aufgehängt ist und mit seinem unteren Einde mit der hydraulischen Vibrationsvorrichtung 34 ebenso über eine Seilhalterung 36 verbunden ist.

Der in Fig.3 und in Fig.4 als Schaltschema dargestellte, zwischen Lasthaken 22 und der zweckmäßig hydraulisch stufenlos regelbare Schwingungsantriebe aufweisenden Vibrationsvorrichtung 34 angeordnete Schwingungsdämpfer 35 ist durch eine hydraulisch beaufschlagbare Zylinder-Kolben-Anordnung 37 gebildet. Beide Kammern 38 und 39 des Hydraulik-Zylinders 4o beidseits des Kolbens 41 sind über Leitungen jeweils mit voneinander unabhängigen, mit Drucköl bzw. Gas gefüllten Membranspeichern 42 und 43 verbunden. Die hydraulische Vibrationsvorrichtung 34 als auch der Schwingungsdämpfer 35 ist hiebei über die am Fahrzeug angeordnete Hydraulikversorgungseinrichtung 9 beaufschlagbar. Jede Zylinderkammer 38 und 39 ist weiters mit einem Absperrhahn 44 bzw. 45 für die Druckölspeisung, zweckmäßig in Verbindung mit einem Entlüftungselement, verbunden und jedem Membranspeicher 42 und 43 ist zur Regelung der Gasvorspannung ein Manometer 46 vorgeschaltet. Der Öldruck in der der Vibrationsvorrichtung 34 benachbarten Kammer 39 des Hydraulik-Zylinders 4o ist hierbei im Vergleich zum Öldruck in der dem Lasthaken 22 benachbarten Kammer 38 größer und der Gasdruck im der Vibrationsvorrichtung 34 benachbarten Membranspeicher 42 ebenfalls größer als der Gasdruck im, dem Lasthaken 22 benachbarten Membran speicher 43. Der hydraulisch beaufschlagbare Schwingungsdämpfer 35 ist mit dem Hydraulik-Zylinder 4o über eine Halterung 47 am Lasthaken 22 aufgehängt und das Ende der Kolbenstange des Kolbens 41 ist ebenso mit einer Halterung 48 zur Aufnahme der hydraulischen Vibrationsvorrichtung 34 über die Seilhalterung 36 ausgebildet.

Wie in Fig.3 und auch in den Fig.1 und 2 erkennbar, ist am Maschinenrahmen 1o des Fahrzeuges 1 und zwar an beiden Maschinenrahmen-Längsseiten jeweils ein über eine hydraulische Zylinder-Kolben-Anordnung 49 beaufschlagbarer und über jeweils eine Achse 5o im wesentlichen parallel zur Gleisebene verschwenkbarer Zentrier- bzw. Führungs-Ausleger 51 und 52 angeordnet. Diese Ausleger 51 bzw. 52 sind, wie insbesondere schematisch in Fig.2 in strichlierter Stellung ersichtlich, mit unter Federwirkung stehenden Führungsrollen 53 versehen, die zur Erst-Zentrierung insbesondere für die Ortung des einzutreibenden Fundamentrohres 26, 27 oder 28 dienen, so daß das von einer vorzugsweise hydraulisch beaufschlagbaren Klemmvorrichtung 54 der hydraulischen Vibrationsvorrichtung 34 erfaßte Fundamentrohr 26 bzw. 27 oder 28 gemeinsam mit diesen Führungsrollen 53 für den Einrammvorgang erfaß- bzw. zentrierbar ist.

Zweckmäßig sind die Antriebe 15 und 19 des Seil-Krans 11 zur Seiten- und Höhenverstellung, sowie der Kran-Schwenkantrieb 18 als auch die hydraulische Vibrationsvorrichtung 34 und der hydraulische Schwingungsdämpfer 35 sowie die Hydraulikantriebe für die Klemmvorrichtung 54 und die hydraulischen Zylinder-Kolben-Anordnungen 49 der seitenverschwenkbaren Ausleger 51 und 52 an die am Fahrzeug 1 vorgesehene gemeinsame Hydraulikversorgungseinrichtung 9 angeschlossen.

Wie in Fig.1 und 2 weiters erkennbar, weist das in Richtung des Pfeiles 55 auf dem Gleis 5 verfahrbare Fahrzeug 1 mit seinem Seil-Kran insgesamt 41 Fundamentrohre 26, 27 und 28 auf, wobei bereits ein derartiges Fundamentrohr 28, wie auf der rechten Seite der Zeichnung in Fig.1 und 2 ersichtlich ist, in das Schotterbett 32 bzw. die darunter befindlichen Erdschichten 33 - siehe auch Fig.3 - mittels dieser hydraulischen Vibrationsvorrichtung 34 unter Inan spruchnahme des dazwischengeschalteten Schwingungsdämpfers 35 eingerammt wurde. Auf diesem Fundamentrohr 28 ist weiters bereits ein Fahrleitungsmast 56 befestigt. In Fig.2 der Zeichnung ist in strichlierten Linien eine Zwischenstellung eines derart von dem ausgeschwenkten Zentrier- bzw. Führungs-Ausleger 52 mit den Führungsrollen 53 erfaßten Fundamentrohres 28 dargestellt. In Fig.3 ist das mit strichpunktierten Linien eingezeichnete Lichtraumprofil mit 57 bezeichnet.

Im folgenden wird nun die Funktionsweise des erfindungsgemäßen Einrichtungssystem zum Eintreiben von Fundamentrohren für Leitungsmaste an Bahngeleisen mittels eines gleisverfahrbaren Fahrzeuges mit seiten- und höhenverstellbarem Seil-Kran an Hand des dargestellten Ausführungsbeispieles näher beschrieben.

Vor dem Eintreiben dieser Fundamentrohre 26 bzw. 27 oder 28 werden neben dem Gleis 5 mittels geeigneter Vermessungsgeräte die Stellen, an welchen die Fundamentrohre für die Fahrleitungsmaste 56 eingerammt werden sollen, genau festgelegt und markiert. Danach wird das selbstverfahrbare Fahrzeug 1 in Richtung des Pfeiles 55 durch den Bedienungsmann jeweils unmittelbar bis zu dieser Markierungsstelle verfahren in der Weise, daß der Seil-Kran 11 neben dieser Stelle zu stehen kommt. Der Seil-Kran 11 wird danach - wie insbesondere aus den Fig.1, 2 und 3 erkennbar ist - von dem Bedienungsmann betätigt und zwar derart, daß der Teleskop-Ausleger 14 mit dem in dem Lasthaken 22 aufgehängten hydraulischen Schwingungsdämpfer 35 bis zu der im vorderen Bereich des Fahrzeuges auf einem Lagerbock 58 abgestellten hydraulischen Vibrationsvorrichtung 35 dirigiert wird, wobei letztere in die Halterung 48 des Schwingungsdämpfers eingehängt wird. Der Seil-Kran 11 wird nun um 180° nach rückwärts verschwenkt und ein Fundamentrohr 28 mit der hydraulischen Klemmvorrichtung 54 erfaßt und von der entsprechenden Führungshülse 3o abgehoben und etwa bis zur Markierungsstelle seiten- und höhenverschwenkt. Um das Fundamentrohr 28 an dieser Stelle genau zentrieren und ausrichten zu können, wird dieses - wie schematisch in Fig.2 unten angedeutet - durch die drei Führungsrollen 53 des über die hydraulische Zylinder-Kolben-Anordnung 49 beaufschlag ten Zentrier- bzw. Führungs-Auslegers 52 in die richtige vertikale Lage verbracht, wie insbesondere aus Fig.3 erkennbar ist. Danach beginnt der eigentliche Eintreibevorgang, wobei mit dem Einrichtungssystem 31 das Fundamentrohr 28 durch Beaufschlagung der hydraulischen Vibrationsvorrichtung 34 in das Schotterbett 32 bzw. die darunter liegenden Erdschichten 33 eingetrieben wird. Die hydraulische Vibrationsvorrichtung 34 weist stufenlos regelbare, hydraulische Schwingungserreger 59 für vorzugsweise vertikal gerichtete Schwingungen auf, mit welchen je nach Beschaffenheit des Untergrundes unterschiedlich beaufschlagt werden kann. Beim Eintreibevorgang wirken nicht nur die Vibrationen der hydraulischen Vibrationsvorrichtung 34, sondern auch das relativ hohe Gewicht - im vorliegenden Ausführungsbeispiel etwas das des ca. 6oo mm starken Fundamentrohres 28 sowie auch das Vibratorgewicht - wobei das Seil 21 mit dem am Lasthaken 22 aufgehängten Schwingungsdämpfer 35 und die mit dem Fundamentrohr 28 verbundene hydraulische Vibrationsvorrichtung 34 während des Einrammvorganges unter Zugbelastung steht.

Die bei dem Eintreibevorgang auftretenden Schwingungen werden über die Seilhalterung 36 auf den Schwingungsdämpfer 35 übertragen und von diesem absorbiert bzw. aufgefangen und eliminiert. Die von der hydraulischen Vibrationsvorrichtung kommenden Schwingungen werden über die Kolbenstange des Kolbens 41 zu einer vorgespannten Hydraulik-Ölsäule im Zylinder 4o abgeleitet. Um dies zu erreichen, wird der Hydraulik-Zylinder 4o auf beiden Seiten des Kolbens 41 in seinen Kammern 38 bzw. 39 mit Drucköl vorgespannt, wobei der Öldruck in der der Vibrationsvorrichtung 34 benachbarten Kammer 39 im Vergleich zum Öldruck in der dem Lasthaken 22 benachbarten Kammer 38 größer ist. Andererseits ist der Gasdruck im, der Vibrationsvorrichtung 34 benachbarten Membranspeicher 42 - mit seiner Membrane 6o - ebenfalls größer als der Gasdruck im, dem Lasthaken 22 benachbarten Membranspeicher 43 - mit seiner Membrane 61. Die in Fig.4 ersichtlichen Membranspeicher 42 und 43 werden durch ihre jeweiligen - rein schematisch angedeuteten - Membranen 6o bzw. 61 jeweils in zwei Kammern unterteilt, wobei die obere Kammer den Gasteil und die untere Kammer den Druckflüssigkeitsteil darstellt. Zweckmäßig beträgt hierbei der Öldruck im Membranspeicher 42 vierzig bar und der Gasdruck zwanzig bar und im Membranspeicher 43 der Öldruck achtundzwanzig bar und der Gasdruck vierzehn bar. Die von der hydraulischen Vibrationsvorrichtung 34 kommenden Schwingungen werden somit über die Kolbenstange des Kolbens 41 zu der vorgespannten Hydraulik-Ölsäule im Zylinder 4o abgeleitet. Der Gasvorspanndruck wird hierbei über die Zylinder-Ölsäule in Schwingungen versetzt, wodurch der äußere Mantel des Hydro-Zylinders 4o, der mit dem Lasthaken 22 verbunden ist, weitgehend von Schwingungen freigehalten wird. Mit dem beschriebenen hydraulischen Schwingungsdämpfer 35 werden somit die auftretenden Schwingungen von der hydraulischen Vibrationsvorrichtung 34 her kontinuierlich stufenförmig reduziert, wobei am Lasthaken 22 dann im wesentlichen keinerlei Schwingungen mehr zur Wirkung kommen. Nach dem vollständigen Eintreiben des Fundamentrohres 28, wie auch auf der rechten Seite der Fig.1 und 2 ersichtlich, wird der Kran 11 wieder in die Ausgangslage verbracht, wobei die Vibrationsvorrichtung 34 mit dem Schwingungsdämpfer 35 zweckmäßig am Lasthaken 22 verbleibt und jedoch nicht mehr hydraulisch beaufschlagt wird. Nach Vorfahrt in Richtung des Pfeiles 55 wird das Fahrzeug 1 zur nächsten Markierungsstelle seitlich des Gleises 5 verfahren, wo sich der beschriebene Vorgang wiederholt.

Durch das erfindungsgemäße Einrichtungssystem 31 können insbesondere die üblicherweise auftretenden schädlichen Schwingungs-Wechselbeanspruchungen am Kranarm nahezu vollständig ausgeschaltet werden, wodurch die Lebensdauer des Seil-Krans 11 wesentlich erhöht wird und von Haus aus ein Kran mit niedrigerer Tragwerksgruppe für diese Zwecke verwendbar ist, der wirtschaftlicher einsetzbar ist und darüberhinaus eine weitaus höhere Leistung erbringt als ein vergleichbarer Kran höherer Tragwerksgruppe ohne Zwischenschaltung eines derartigen Schwingungsdämpfers 35. Auch das Fahrzeug 1 kann mit einem derart kleineren Seil-Kran 11 zweckmäßiger und vorteilhafter mit derartigen Fundamentrohren 26, 27 und 28 beladen werden, insbesondere hinsichtlich des Platzbedarfes und des Schwenkbereiches des Seil-Krans 11 auch unter Berücksichtigung des Lichtraumprofiles 57 bei Überstell- und Transportfahrten. Wie in Fig.1 im linken Bereich der Zeichnung erkennbar, verbleibt bei derartigen Überstellfahrten des Fahrzeuges 1 die hydraulische Vibrationsvorrichtung 34 auf dem Lagerbock 58 bei eingezogenem Seil-Kran 11. In Fig.1 und 2 ist weiters auch auf der rechten Seite der Zeichnung ein bereits eingetriebenes Fundamentrohr 28 ersichtlich, mit dem an diesem befestigten Fahrleitungsmast 56. Die ursprüngliche Lagerstelle dieses bereits eingetriebenen Fundamentrohres 28 ist in der wannenförmigen Ausnehmung des Fahrzeuges 1 mit strichlierten Linien dargestellt. Selbstverständlich kann im Rahmen der Erfindung jeder andere geeignete Kran oder auch Bagger in Verbindung mit dem Einrichtungssystem 31 Verwendung finden, wobei die mit dem erfindungsgemässen Einrichtungssystem 31 bzw. dem Schwingungsdämpfer 35 erzielbare Ausschaltung der auftretenden Schwingungen auf das Last- bzw. Halterungsmittel wesentliche wirtschaftliche Ersparnisse durch Wahl eines entsprechend kleineren, aber trotzdem leistungsfähigeren Krans bringt. Weiters kann beispielsweise bei Anlage der Führungsrollen 53 an das Fundamentrohr 26, 27 oder 28 auch während des Eintreibevorganges zwischen Ausleger 51 und/oder 52 und der Halterung für die Führungsrollen ebenso ein, zweckmäßig wesentlich kleinerer Schwingungsdämpfer 35 erfindungsgemäß angeordnet werden. Mit dem Einrichtungssystem 31 wird somit insbesondere ein rascheres und besseres Eintreiben solcher Fundamentrohre 26, 27 und 28 bei wesentlich höherer Lebensdauer aller Komponenten erzielt. Das mit dem Einrichtungssystem 31 ausgestattete Fahrzeug 1 erlaubt darüberhinaus nach der Erfindung ein besonders rasches und problemloses Transportieren und Eintreiben solcher Fundamentrohre 26, 27 bzw. 28 an der einen oder der anderen Seite des Gleises 5, wodurch in besonders wirtschaftlicher Weise längere Gleisstrecken rasch, sicher und genau mit derartigen Fundamentrohren für Fahrleitungsmaste versehen werden können.

**Patentansprüche**

1. Einrichtungssystem (31) zum Eintreiben von Fundament- bzw. Halteelementen, wie Profile od.dgl., in Erdschichten, insbesondere Fundamentrohre (28) für Leitungsmasten an Bahngeleisen (5), mittels einer an einem seiten- und höhenverstellbaren Last-Ausleger, wie einem Seil-Kran (11) angeordneten Vibrationsvorrichtung (34) wobei zwischen Last-Halterungsmittel, insbesondere dem Lasthaken (22) des Krans (11) und der Vibrationsvorrichtung (34) zum Beaufschlagen des einzutreibenden Elementes ein Schwingungsdämpfer angeordnet ist, dadurch gekennzeichnet, daß der über eine Seilhalterung (36) mit der Vibrationsvorrichtung (34) verbundene Schwingungsdämpfer (35) durch eine hydraulisch beaufschlagbare, zwei Hydraulik-Zylinder-Kammern (38, 39) aufweisende Zylinderkolben-Anordnung gebildet und der Zylinder an – mit Drucköl bzw. Gas gefüllte – Membranspeicher (42, 43) angeschlossen ist, wobei jede Hydraulik-Zylinder-Kammer (38, 39) mit einem Absperrorgan (44, 45) für die Drucködlspeisung verbunden und jedem Membranspeicher (42, 43) zur Regelung der Gasvorspannung ein Manometer (46) vorgeschaltet ist.

2. Einrichtungssystem nach Anspruch 1, dadurch gekennzeichnet, daß die über eine Seilhalterung (36) mit dem hydraulisch beaufschlagbaren Schwingungsdämpfer (35) verbundene hydraulische Vibrationsvorrichtung (34) als hydraulischer Hammer und zum klemmbaren Erfassen bzw. Transportieren des einzutreibenden Elementes, insbesondere des Fundamentrohres (26 bzw. 27 oder 28) ausgebildet ist.

3. Einrichtungssystem nach Anspruch 1 oder 2, dadurch gekennzeichnet, daß die beiden Kammern (38, 39) des Hydraulik-Zylinders (40) des hydraulischen Schwingungsdämpfers (35) beidseitig des Kolbens (41) über Leitungen jeweils mit den voneinander unabhängigen, mit Drucköl bzw. Gas gefüllten Membranspeichern (42, 43) verbunden sind.

4. Einrichtungssystem nach einem der Ansprüche 1 bis 3, dadurch gekennzeichnet, daß der mit der hydraulischen Vibrationsvorrichtung (34) über den hydraulisch beaufschlagbaren Schwingungsdämpfer (35) verbundene, seiten- und höhenverstellbare Kran (11) mittig auf einem mit Schienenfahrwerken versehenen Fahrzeug (1) angeordnet ist, welches beidseitig des Kran-Schwenkbereiches zur im wesentlichen vertikalen Lagerung von Fundamentrohren (26, 27, 28) für Leitungsmasten (56) zum Eintreiben links oder rechts eines Bahngeleises (5) ausgebildet ist, wobei an beiden Längsseiten des Maschinenrahmens (10) des Fahrzeuges über jeweils eine hydraulische Zylinder-Kolben-Anordnung (49) beaufschlagbare und über eine Achse (50) im wesentlichen parallel zur Gleisebene verschwenkbare Zentrier- bzw. Führungs-Ausleger (51, 52) angeordnet sind.

5. Einrichtungssystem nach Anspruch 4, dadurch gekennzeichnet, daß der hydraulische Schwingungsdämpfer (35) an der gleichen, am Fahrzeug vorgesehenen Hydraulikversorgungseinrichtung (9) angeschlossen ist wie alle anderen hydraulischen Antriebe, insbesondere die Antriebe (15, 18, 19) zur Seiten- und Höhenverstellung des Krans (11), der hydraulischen Vibrationsvorrichtung (34) und der seitenverschwenkbaren Ausleger (51, 52).

**Claims**

1. A system (31) for driving foundation or holding elements, such as profiles or the like, into layers of earth, more especially foundation tubes (28) for overhead power lines along railway tracks (5), by means of a vibration unit (34) mounted on a laterally and vertically displaceable load jib, such as a cable crane (11), a vibration damper being arranged between load holding means, particularly the load hook (22) of the crane (11), and the vibration unit (34) for acting on the element to be driven in, characterized in that the vibration damper (35) connected to the vibration unit (34) by a cable holder (36) is formed by a hydraulically operable cylinder-and-piston assembly comprising two hydraulic cylinder chambers (38, 39) and the cylinder is connected to diaphragm accumulators (42, 43) filled with pressure oil or gas, each hydraulic cylinder chamber (38, 39) being connected to a shut-off member (44, 45) for the supply of pressure oil and each diaphragm accumulator (42, 43) being preceded by a manometer (46) for controlling the system gas pressure.

2. A system as claimed in claim 1, characterized in that the hydraulic vibration unit (34) connected to the hydraulically operable vibration damper (35) by a cable holder (36) is in the form of a hydraulic hammer and is designed to grip and transport the element to be driven in, more particularly the foundation tube (26 or 27 or 28).

3. A system as claimed in claim 1 or 2, characterized in that the two chambers (38, 39) of the hydraulic cylinder (40) of the hydraulic vibration damper (35) are each connected by pipes at either end of the piston (41) to the independent diaphragm accumulators (42, 43) filled with pressure oil or gas.

4. A system as claimed in any of claims 1 to 3, characterized in that the laterally and vertically displaceable crane (11) connected to the hydraulic vibration unit (34) by the hydraulically operable vibration damper (35) is centrally mounted on a vehicle (1) which is equipped with on-track undercarriages and which, on either side of the crane slewing range, is designed for the substantially vertical mounting of foundation tubes (26, 27, 28) for overhead line poles (56) for driving in on the left or right of a railway track (5), centring or guide jibs (51, 52) each operable by a hydraulic cylinder-and-piston assembly (49) and pivotal about an axis (50) substantially parallel to the plane of the track being arranged on either longitudinal side of the machine frame (10) of the vehicle.

5. A system as claimed in claim 4, characterized in that the hydraulic vibration damper (35) is connected to the same hydraulic supply unit (9) on the vehicle as all other hydraulic drives, more particularly the drives (15, 18, 19) for the lateral and vertical displacement of the crane (11), the hydraulic vibration unit (34) and the laterally pivotal jib (51, 52).

**Revendications**

1. Installation (31) pour enfoncer, dans des couches du sol, des éléments respectifs de fondation ou de retenue tels que des profilés ou éléments similaires, en particulier des tuyaux de fondation (28) pour des pylônes de lignes électriques bordant des voies ferrées (5), au moyen d'un dispositif à vibrations (34) qui est installé sur un bras de charge en porte-à-faux réglable latéralement et en hauteur, tel qu'un palan (11) à câble, un amortisseur de vibrations étant interposé entre le moyen de retenue de la charge, notamment le crochet de charge (22) du palan (11), et le dispositif à vibrations (34) destiné à agir sur l'élément devant être enfoncé, caractérisée par le fait que l'amortisseur de vibrations (35), relié au dispositif à vibrations (34) par l'intermédiaire d'un élément (36) de retenue du câble, est formé par un vérin sollicitable hydrauliquement et présentant deux chambres cylindriques hydrauliques (38, 39), et le cylindre est relié à des accumulateurs (42, 43) à diaphragmes – respectivement emplis d'huile sous pression ou de gaz –, chaque chambre cylindrique hydraulique (38, 39) étant reliée à un organe d'isolement (44, 45) pour l'alimentation en huile sous pression, et un manomètre (46) étant branché en amont de chaque accumulateur (42, 43) à diaphragme, en vue de réguler la précharge gazeuse.

2. Installation selon la revendication 1, caractérisée par le fait que le dispositif hydraulique à vibrations (34) relié, par l'intermédiaire d'un élément (36) de retenue du câble, à l'amortisseur de vibrations (35) sollicitable hydrauliquement, est réalisé sous la forme d'un marteau hydraulique et est respectivement conçu pour enserrer fermement ou pour transporter l'élément devant être enfoncé, en particulier le tuyau de fondation (26, respectivement 27 ou 28).

3. Installation selon la revendication 1 ou 2, caractérisée par le fait que les deux chambres (38, 39) du cylindre hydraulique (40) de l'amortisseur hydraulique de vibrations (35) sont respectivement reliées de part et d'autre du piston (41), par l'intermédiaire de conduites, aux accumulateurs (42, 43) à diaphragmes qui sont indépendants l'un de l'autre, et sont respectivement emplis d'huile sous pression ou de gaz.

4. Installation selon l'une des revendications 1 à 3, caractérisée par le fait que le palan (11) réglable latéralement et en hauteur, relié au dispositif hydraulique à vibrations (34) par l'intermédiaire de l'amortisseur de vibrations (35) sollicitable hydrauliquement, est implanté centralement sur un véhicule (1) qui est pourvu de bogies et est réalisé, de part et d'autre de la plage de pivotements du palan, en vue du montage substantiellement vertical de tuyaux de fondation (26, 27, 28) destinés à des pylônes (56) de lignes électriques, en vue de l'enfoncement à gauche ou à droite d'une voie ferrée (5), des flèches en porte-à-faux (51, 52) de centrage ou de guidage, disposées sur les deux côtés longitudinaux du châssis (10) de la machine du véhicule, pouvant être sollicitées par l'intermédiaire d'un vérin hydraulique respectif (49), et pouvant pivoter, par l'intermédiaire d'un axe (50), pour l'essentiel parallèlement au plan de la voie ferrée.

5. Installation selon la revendication 4, caractérisée par le fait que l'amortisseur hydraulique de vibrations (35) est raccordé au même dispositif d'alimentation hydraulique (9), prévu sur le véhicule, que tous les autres entraînements hydrauliques, en particulier les entrainements (15, 18, 19) assurant le réglage latéral et en hauteur du palan (11), du dispositif hydraulique à vibrations (34) et des flèches en porte-à-faux (51, 52) pouvant pivoter latéralement.

Fig.1

Fig.2

Fig. 3

Fig. 4